(19) Europäisches Patentamt
European Patent Office
Office européen des brevets

(11) **EP 4 733 450 A1**

(12) **EUROPEAN PATENT APPLICATION**
published in accordance with Art. 153(4) EPC

(43) Date of publication:
**29.04.2026 Bulletin 2026/18**

(21) Application number: **24825847.7**

(22) Date of filing: **14.06.2024**

(51) International Patent Classification (IPC):
**C25B 11/052** (2021.01)  **C25B 1/04** (2021.01)
**C25B 9/00** (2021.01)  **C25B 11/091** (2021.01)

(52) Cooperative Patent Classification (CPC):
Y02E 60/36

(86) International application number:
**PCT/JP2024/021774**

(87) International publication number:
**WO 2024/262446 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.06.2023 JP 2023103754**

(71) Applicant: **Panasonic Intellectual Property
Management Co., Ltd.
Kadoma-shi, Osaka 571-0057 (JP)**

(72) Inventors:
• **YOROZUYA, Misa**
  **Kadoma-shi, Osaka 571-0057 (JP)**
• **ASAZAWA, Koichiro**
  **Kadoma-shi, Osaka 571-0057 (JP)**
• **SAWADA, Koichi**
  **Kadoma-shi, Osaka 571-0057 (JP)**

(74) Representative: **Eisenführ Speiser
Patentanwälte Rechtsanwälte PartGmbB
Gollierstraße 4
80339 München (DE)**

(54) **WATER ELECTROLYSIS ELECTRODE, WATER ELECTROLYSIS CELL, WATER ELECTROLYSIS DEVICE, AND METHOD FOR MANUFACTURING WATER ELECTROLYSIS ELECTRODE**

(57)     A water electrolysis electrode 1 includes an electroconductive substrate 10 and a layered double hydroxide layer 20. The layered double hydroxide layer 20 is disposed on a surface of the electroconductive substrate 10. The layered double hydroxide layer 20 includes two or more transition metals. A contact angle of a surface of the layered double hydroxide layer 20 is 20° or more and 100° or less. The contact angle on the surface of the layered double hydroxide layer 20 may be 26° or more.

FIG.1

EP 4 733 450 A1

**Description**

TECHNICAL FIELD

The present disclosure relates to a water electrolysis electrode, a water electrolysis cell, a water electrolysis device, and a method for manufacturing a water electrolysis electrode.

BACKGROUND ART

As an electrocatalyst for a water electrolysis electrode, for example, a layered double hydroxide (LDH) is known.
In Non Patent Literature 1, activity of oxygen evolution reaction (OER) of an electrode including a Ni-Fe layered double hydroxide (Ni-Fe LDH) is examined.
In Non Patent Literature 2, it is described that the local electronic structure of Ni-Fe LDH is modulated by an interfacial interaction between FeOOH and the Ni-Fe LDH, which enhances the OER electrocatalysis.

CITATION LIST

Non Patent Literature

Non Patent Literature 1: Seyeong Lee et al, "Operational durability of three-dimensional Ni-Fe layered double hydroxide electrocatalyst for water oxidation," Electrochimica Acta, 2019, Vol. 315, p. 94-101
Non Patent Literature 2: Jiande Chen et al, "Interfacial Interaction between FeOOH and Ni-Fe LDH to Modulate the Local Electronic Structure for Enhanced OER Electrocatalysis," ACS Catalysis, 2018, Vol. 8, p. 11342-11351

SUMMARY OF INVENTION

Technical Problem

The present disclosure provides a water electrolysis electrode that is advantageous from the viewpoint of suppressing increase in overpotential.

Solution to Problem

The present disclosure provides a water electrolysis electrode including:

an electroconductive substrate; and
a layered double hydroxide layer including two or more transition metals and disposed on a surface of the electroconductive substrate, wherein
a contact angle of a 6 mol/L aqueous potassium hydroxide solution on a surface of the layered double hydroxide layer is 20° or more and 100° or less.

Advantageous Effects of Invention

According to the present disclosure, it is possible to provide a water electrolysis electrode that is advantageous from the viewpoint of suppressing increase in overpotential.

BRIEF DESCRIPTION OF DRAWINGS

FIG. 1 is a cross-sectional view schematically showing an example of a water electrolysis electrode according to the present disclosure.
FIG. 2 is a diagram schematically showing a relation between a water electrolysis electrode and bubbles evolved by a water electrolysis reaction.
FIG. 3 is a cross-sectional view schematically showing an example of an optical model of a water electrolysis electrode, the optical model being obtained by spectroscopic ellipsometry.

FIG. 4 is a diagram schematically showing an example of a crystal structure of a layered double hydroxide (LDH).

FIG. 5 is a flowchart showing an example of a method for manufacturing a water electrolysis electrode.

FIG. 6 is a diagram schematically showing an example of a mechanism in manufacturing a water electrolysis electrode.

FIG. 7 is a cross-sectional view schematically showing an example of a water electrolysis cell according to the present disclosure.

FIG. 8 is a cross-sectional view schematically showing an example of a water electrolysis device according to the present disclosure.

FIG. 9 is a cross-sectional view schematically showing an example of a water electrolysis cell according to the present disclosure.

FIG. 10 is a cross-sectional view schematically showing an example of a water electrolysis device according to the present disclosure.

FIG. 11 is a graph showing a relation between a contact angle and an overpotential according to each Example and Comparative Example.

DESCRIPTION OF EMBODIMENTS

(Findings on which the present disclosure is based)

Use of renewable energy sources such as solar power and wind power has been attracting attention as a measure against global warming. Power generation using renewable energy sources may lead to a problem of surplus electricity being wasted. For this reason, the efficiency of renewable energy use is not necessarily sufficient. Therefore, methods of making effective use of surplus electricity by producing and storing hydrogen using surplus electricity are being considered.

Electrolysis of water is a possible method for producing hydrogen using surplus electricity. In order to produce hydrogen affordably and stably, there is a demand for development of a highly efficient water electrolysis device.

In a water electrolysis device, oxygen is evolved at an anode and hydrogen is evolved at a cathode. The reaction in which oxygen is evolved at the anode may be called an anodic reaction, and the reaction in which hydrogen is evolved at the cathode may be called a cathodic reaction. In order to provide a water electrolysis device superior in electrode efficiency, it is desirable that the overpotential is low especially at the anode. In addition, it is desirable that the overpotential is low at the cathode as well. Therefore, there is a demand for development of an electrocatalyst for a water electrolysis electrode, the electrocatalyst is suitable for suppressing increase in overpotential.

For example, a layered double hydroxide (LDH) including two or more transition metals is promising as an electrocatalyst for a water electrolysis electrode from the viewpoint of the large specific surface area and the various combinations of metal ions. A water electrolysis electrode, for example, has an electroconductive substrate and a LDH layer including two or more transition metals disposed on a surface of the electroconductive substrate. In a water electrolysis device including such a water electrolysis electrode, bubbles evolved by a water electrolysis reaction may cause a voltage drop. This may cause a decrease in electrolysis efficiency. In detail, a bubble of oxygen, hydrogen or the like evolved by the water electrolysis reaction may adhere to the surface of the water electrolysis electrode. In addition, the size of the bubble adhering to the surface of the water electrolysis electrode may increase. Such adhesion of a bubble to the surface of the water electrolysis electrode or the increase in the size of the bubble adhering to the surface of the water electrolysis may decrease the effective area of the water electrolysis electrode. This increases the reaction resistance of the water electrolysis reaction. The reaction resistance during the water electrolysis reaction increases the overpotential, resulting in decrease in electrolysis efficiency. As a result of diligent studies, the present inventors have discovered that the increase in overpotential can be suppressed by appropriately adjusting the contact angle on the surface of the LDH layer in the water electrolysis electrode. Based on this new finding, the present inventors have completed the water electrolysis electrode according to the present disclosure.

Embodiments of the present disclosure are specified below with reference to the attached drawings. The embodiments described below are all intended to provide comprehensive or specific examples. Therefore, the numerical values, the shapes, the materials, the components, the arrangement or the positions of the components, the connection forms or the like described in the following embodiments are simply intended to demonstrate examples, but are not intended to limit the present disclosure. Among the components in the following embodiments, the components that are not described in the independent claims indicating the highest-level concept are described as optional components. Descriptions of components with the same reference numerals in the drawings may be omitted. The drawings show each component schematically to facilitate understanding, so that the shapes, the dimensional ratios and the like may not be accurately depicted. As for the manufacturing method, the order of the steps may be exchanged, or any known steps may be added as necessary.

(First embodiment)

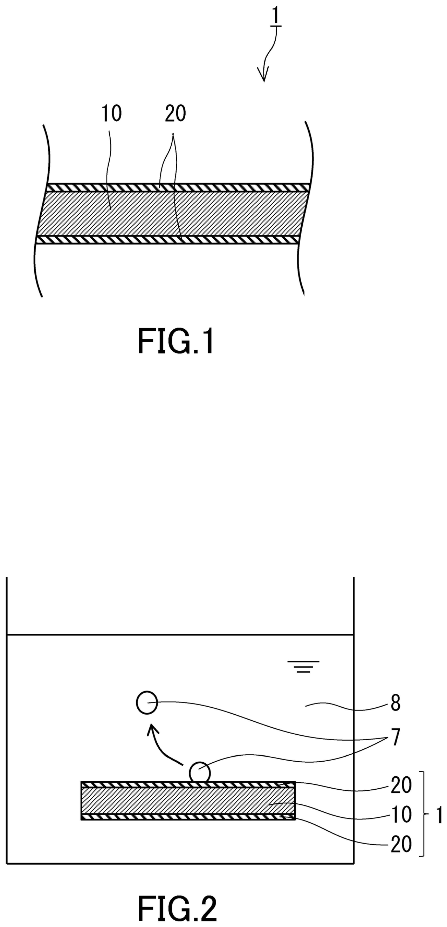

FIG. 1 is a cross-sectional view schematically showing an example of a water electrolysis electrode according to the present disclosure. As shown in FIG. 1, a water electrolysis electrode 1 includes an electroconductive substrate 10 and a layered double hydroxide (LDH) layer 20. The LDH layer 20 is disposed on a surface of the electroconductive substrate 10. For example, the surface of the electroconductive substrate 10 is coated with the LDH layer 20. The LDH layer 20 can function as a catalyst for an anodic reaction or a cathodic reaction in a water electrolysis. The LDH layer 20 includes LDH as a catalyst for the water electrolysis.

In the water electrolysis electrode 1, the contact angle on the surface of the LDH layer 20 is 20° or more and 100° or less. The contact angle is a value measured using a droplet of a 6 moles/liter (mol/L) aqueous potassium hydroxide solution. With this configuration, a water electrolysis electrode 1 suitable for suppressing an increase in overpotential can be provided.

The contact angle on the surface of the LDH layer 20 can be measured using a contact angle meter. The contact angle of the 6 mol/L aqueous potassium hydroxide solution on the surface of the LDH layer 20 can be determined in accordance with the θ/2 method. Specifically, first, a 0.2 microliter (μL) droplet of a 6 mol/L aqueous potassium hydroxide solution is made adhere to a surface of the LDH layer 20 of the water electrolysis electrode 1. The contact angle on the surface of the LDH layer 20 can then be measured by measuring, with a contact angle meter, an angle between the tangent line of the droplet and the surface of the LDH layer 20. A micro contact angle meter or an ultra-small contact angle meter may be used to measure the contact angle. With the micro contact angle meter or the ultra-small contact angle meter, a very small droplet of nanoliter order to picoliter order can be formed on the surface of the LDH layer 20. Therefore, the droplet can be formed on the surface of the LDH layer 20 even in the case where the LDH layer 20 is formed on an electroconductive substrate 10 having a mesh structure including a fine metal wire, such as a mesh or expanded metal.

FIG. 2 is a diagram schematically showing a relation between a water electrolysis electrode and a bubble evolved during the water electrolysis reaction. As shown in FIG. 2, the water electrolysis electrode 1 includes an electroconductive substrate 10 and LDH layers 20 disposed on the surfaces of the electroconductive substrate 10. The LDH layers 20 each include LDH. The LDH can contribute to the water electrolysis reaction. The present inventors have found that a bubble 7 evolved from the water electrolysis electrode 1 can be easily separated from the surface of the LDH layer 20 by controlling wettability of the surface of the LDH layer 20, specifically by adjusting the contact angle on the surface of the LDH layer 20 to be 20° or more and 100° or less. As shown in FIG. 2, when the bubble 7 is evolved on the surface of the LDH layer 20 by the water electrolysis reaction, the bubble 7 adheres to the surface of the LDH layer 20. In this state, in the case where the surface of the LDH layer 20 is easily wettable, that is, in the case where the contact angle on the surface of the LDH layer 20 is 20° or more and 100° or less, the electrolyte 8 may easily spread on the surface of the LDH layer 20. Therefore, the electrolyte 8 can easily penetrate between the surface of the LDH layer 20 and the bubble 7. If the electrolyte 8 gets into a gap between the bubble 7 and the surface of the LDH layer 20, the contact area between the LDH layer 20 and the bubble 7 can be reduced. This makes it easier for the bubble 7 to separate from the surface of the LDH layer 20. As a result, the effective area of the water electrolysis electrode 1 is less likely to be reduced during the water electrolysis reaction, and the reaction resistance of the water electrolysis reaction is less likely to increase. On the other hand, in the case where the wettability of the surface of the LDH layer 20 is poor, namely, in the case where the contact angle of the surface of the LDH layer 20 exceeds 100°, the electrolyte 8 is less likely to spread on the surface of the LDH layer 20. This makes it difficult for the electrolyte 8 to penetrate between the bubble 7 and the surface of the LDH layer 20, and the bubble 7 is less likely to separate from the surface of the LDH layer 20. As a result, the effective area of the water electrolysis electrode 1 is likely to be reduced and the reaction resistance in the water electrolysis reaction is likely to increase.

In the water electrolysis electrode 1, the contact angle on the surface of the LDH layer 20 may be 26° or more. With this configuration, it is possible to obtain a water electrolysis electrode 1 that is more suitable for suppressing an increase in overpotential.

In the water electrolysis electrode 1, the contact angle on the surface of the LDH layer 20 may be 26° or more and 94° or less, may be 30° or more and 80° or less, or may be 40° or more and 65° or less. With this configuration, it is possible to obtain a water electrolysis electrode 1 that is more suitable for suppressing an increase in overpotential.

The LDH layer 20 is bonded to the electroconductive substrate 10, for example. For example, between the LDH layer 20 and the electroconductive substrate 10, any adhesive layer including organic materials such as polymers is not arranged, and thus, the LDH layer 20 is bonded directly to the surface of the electroconductive substrate 10.

In the water electrolysis electrode 1, the thickness of the LDH layer 20 is, for example, 1800 nm or less. With this structure, the amount of the LDH contributing to the water electrolysis reaction in the water electrolysis electrode 1 can be increased, and the increase in the resistance can be suppressed. As a result, it is possible to obtain a water electrolysis electrode 1 that is more suitable for suppressing an increase in overpotential.

The thickness of the LDH layer 20 may be 500 nm or more, or may be 1000 nm or more. With this structure, it is possible to further suppress the increase in overpotential during the anodic reaction and the cathodic reaction of the water electrolysis.

[Layered double hydroxide layer]

The thickness of the LDH layer 20 can be calculated by steps S1 to S4.

The step S1 is a step of measuring a reflection spectrum of the water electrolysis electrode 1 by spectroscopic ellipsometry and obtaining the measurement data E of the polarization parameters of the water electrolysis electrode 1. The step S2 is a step of creating an optical model of the water electrolysis electrode 1 and obtaining simulation data M of polarization parameters based on the optical model. The step S3 is a step of fitting the simulation data M of the polarization parameters to the measurement data E of polarization parameters. The step S4 is a step of calculating thickness of the LDH layer 20 according to the following Formula (1), using the results of the fitting calculation.

$$T_{20} \text{ [nm]} = T_{28} + T_{27} + T_{26} \qquad \text{Formula (1)}$$

In Formula (1), $T_{20}$ indicates the thickness of the LDH layer 20; $T_{28}$ indicates the thickness of the surface roughness layer 28 [nm]; $T_{27}$ indicates the thickness of the dense layer 27 [nm]; and $T_{26}$ indicates the thickness of the interface layer 26 [nm].

In the step S1, the reflection spectrum of the water electrolysis electrode 1 is measured by spectroscopic ellipsometry. Through the step S1, the measurement data E of the polarization parameters of the water electrolysis electrode 1 can be obtained.

In the step S2, an optical model of the water electrolysis electrode 1 is created. Through the step S2, simulation data M of polarization parameters based on the optical model can be obtained.

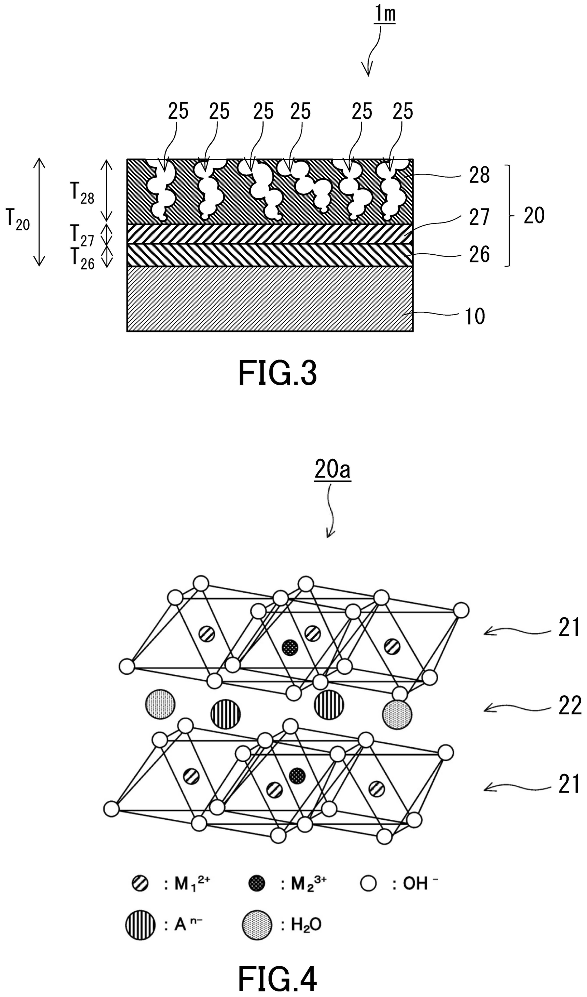

FIG. 3 is a cross-sectional view schematically showing an example of an optical model of a water electrolysis electrode obtained by spectroscopic ellipsometry. As shown in FIG. 3, an optical model 1m includes a LDH layer 20 and an electroconductive substrate 10. The LDH layer 20 has a predetermined thickness $T_{20}$. The LDH layer 20 includes a surface roughness layer 28, a dense layer 27, and an interface layer 26. The surface roughness layer 28 has voids 25. The surface roughness layer 28 has a predetermined thickness $T_{28}$. The dense layer 27 has a predetermined thickness $T_{27}$. The interface layer 26 has a predetermined thickness $T_{26}$.

The thickness $T_{28}$ of the surface roughness layer 28, the thickness $T_{27}$ of the dense layer 27, and the thickness $T_{26}$ of the interface layer 26 are determined by the fitting described below. As shown in FIG. 3, in the optical model 1m, the LDH layer 20 includes the interface layer 26, the dense layer 27, and the surface roughness layer 28, in this order in its thickness direction when viewed from the electroconductive substrate 10. The interface layer 26 is formed of the material of the electroconductive substrate 10 and the LDH included in the LDH layer 20. The dense layer 27 is composed only of the LDH included in the LDH layer 20. The surface roughness layer 28 is formed of the air that can be present in the voids 25 and the LDH included in the LDH layer 20. The volume proportion of the material of the electroconductive substrate 10 and the LDH in the interface layer 26 can be a predetermined proportion. The volume proportion of the LDH and the volume proportion of the air in the surface roughness layer 28 can be a predetermined proportion.

In the step S3, fitting calculations are performed. In the step S3, the simulation data M of the polarization parameters is fit to the measurement data E of the polarization parameters.

Based on the aforementioned optical model 1m, a fitting calculation is performed. Thereby, the thickness $T_{28}$, the thickness $T_{27}$, and the thickness $T_{26}$ can be determined.

The fitting calculation can be performed, for example, using predetermined software, such that the mean square error between the simulation data calculated from the optical model 1m and the measured data is 10° or less. For example, the fitting calculation may be performed using the New Amorphous model and the Tauc-Lorentz model as implemented by HORIBA Jobin Yvon, and the calculation result with the smaller mean square error may be adopted.

In the step S4, the thickness $T_{20}$ of the LDH layer 20 is calculated by the Formula (1) using the fitting result obtained in the step S3.

[Layered double hydroxide]

FIG. 4 is a diagram schematically showing an example of a crystal structure of LDH. A LDH 20a included in the LDH layer 20 has activity with respect to the reaction for evolving a gas such as hydrogen, oxygen or the like on an anode or a cathode for water electrolysis. For example, the LDH 20a can be converted to a hydroxide during an alkaline water electrolysis.

The LDH 20a, for example, has a composition represented by the following Formula (2). In Formula (2), $M1^{2+}$ is a divalent transition metal ion; $M2^{3+}$ is a trivalent transition metal ion; $A^{n-}$ is an interlayer anion; x is a rational number satisfying a requirement $0 < x < 1$; y is a number corresponding to the amount required for charge balance; n is an integer; and m is a rational number.

$$[M1^{2+}_{1-x}M2^{3+}_{x}(OH)_2][yA^{n-}\cdot mH_2O] \qquad \text{Formula (2)}$$

The LDH 20a includes two or more transition metals. The two or more transition metals in the LDH 20a are not limited to specific transition metals. In other words, M1 and M2 in the composition shown in Formula (2) are not limited to specific transition metals. The LDH 20a includes, for example, at least two transition metals selected from the group consisting of V, Cr, Mn, Fe, Co, Ni, Cu, W, and Ru. In this case, the water electrolysis electrode 1 can have superior electrode activity.

The LDH 20a preferably includes at least one transition metal selected from the group consisting of Fe and Ni. In this case, the water electrolysis electrode 1 can have superior electrode activity. In addition, the cost for manufacturing the water electrolysis electrode 1 can be easily reduced.

The LDH 20a may include Ni and Fe. For example, in the composition shown in Formula (2), M1 may be Ni and M2 may be Fe. In this case, the water electrolysis electrode can have superior electrode activity.

In the LDH 20a, the interlayer anion $A^{n-}$ may be an inorganic ion or an organic ion. Examples of the inorganic ions include $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ions include $CH_3(CH_2)_nSO4^-$, $CH_3(CH_2)_nCOO^-$, $CH_3(CH_2)_nPO_4^{2-}$, and $CH_3(CH_2)_nNO_3^-$. $A^{n-}$ can be intercalated, together with water molecules, between the layers of the metal hydroxide. The charge and ionic size of $A^{n-}$ are not limited to specific values. The LDH 20a may include one kind of $A^{n-}$ or plural kinds of $A^{n-}$.

As shown in FIG. 4, the LDH 20a has an $OH^-$ ion at each vertex of an octahedron centered at $M1^{2+}$ or $M2^{3+}$. The LDH 20a includes a metal hydroxide represented by $[M1^{2+}_{1-x}M2^{3+}_x(OH)_2]^{x+}$. This metal hydroxide has a layered structure that includes octahedrons of hydroxides sharing ridges and interconnected in two dimensions. The anion $A^{n-}$ and water molecules are present between the layers of metal hydroxide. The layers of metal hydroxide each function as host layers 21, while a guest layer 22 including anion $A^{n-}$ and water molecules is arranged between the host layers 21. In other words, the LDH 20a as a whole has a sheet-like structure in which the host layers 21 of metal hydroxide and the guest layer 22 including anion $A^{n-}$ and water molecules are alternately stacked. The LDH 20a has a structure in which a portion of $M1^{2+}$ included in the metal hydroxide layer is replaced with $M2^{3+}$.

The crystal structure of LDH 20a and the crystallinity of the LDH 20a can be analyzed qualitatively and quantitatively by X-ray diffraction measurement (XRD).

[Chelating agent]

The LDH layer 20 may include a chelating agent. The chelating agent may coordinate to the transition metal ions included in the LDH 20a. Thereby, the LDH 20a can be stably present in the LDH layer 20. In addition, the LDH 20a is likely to have a small particle size. Furthermore, the LDH layer 20, which is regarded as a dense layer including the LDH 20a and having few voids, is likely to have a desired thickness and to be firmly fixed to the electroconductive substrate 10. This is because the nucleated LDH is likely to grow slowly to be crystalline in the case of forming the LDH layer 20 on the electroconductive substrate 10. These make it easier for the LDH layer 20 to effectively contribute to the anodic reaction or the cathodic reaction of the water electrolysis, and the water electrolysis electrode 1 can have even superior electrode activity.

The chelating agent is not limited to a specific chelating agent. The chelating agent is, for example, an organic compound that can coordinate to the transition metal ions in LDH 20a. The chelating agent may be at least one selected from the group consisting of a bidentate organic ligand and a tridentate organic ligand. Examples of the chelating agents include β-diketones, β-ketoesters, hydroxycarboxylic acids, and hydroxycarboxylates. Examples of the β-diketones include acetylacetone (ACAC), trifluoroacetylacetone, hexafluoroacetylacetone, benzoylacetone, thenoyltrifluoroacetone, dipivaloylmethane, dibenzoylmethane, and ascorbic acid. Examples of β-ketoesters include methyl acetoacetate, ethyl acetoacetate, allyl acetoacetate, benzyl acetoacetate, n-propyl acetoacetate, iso-propyl acetoacetate, n-butyl acetoacetate, isobutyl acetoacetate, tert-butyl acetoacetate, 2-methoxyethyl acetoacetate, and methyl 3-oxopentanoate. Examples of the hydroxycarboxylic acids and their salts include tartaric acid, citric acid, malic acid, gluconic acid, ferulic acid, lactic acid, glucuronic acid, and their salts.

The chelating agent preferably includes at least one selected from the group consisting of acetylacetone and a citrate. In this case, the water electrolysis electrode 1 can have an even superior electrode activity. An example of the citrate is trisodium citrate.

[Electroconductive substrate]

The shape of the electroconductive substrate 10 is not limited to a specific shape. The electroconductive substrate 10 is, for example, shaped as a sheet. The electroconductive substrate 10 may have a non-porous structure, such as a plate or a foil, or a porous structure, such as a mesh, a foamed body, or a nonwoven fabric. The electroconductive substrate 10 preferably has a porous structure. In this case, the surface area of the electroconductive substrate 10 can be increased and the gases evolved during the water electrolysis reaction can easily diffuse.

The electroconductive substrate 10 is not limited to any particular substrate as long as it has electric conductivity. The electroconductive substrate 10 may include a metal, or it may include a resin. The entire electroconductive substrate 10 may be composed of a metal. The electroconductive substrate 10 may have a structure in which a surface layer including a metal is formed on a member of a resin such as polypropylene or polyethylene. In this case, the surface layer including the metal can be a plated film or a sputtered film. The metal included in the electroconductive substrate 10 may be a pure metal such as nickel, or an alloy such as stainless steel or Inconel. Inconel is a registered trademark.

The surface of the electroconductive substrate 10 is preferably formed of nickel. In this case, the electroconductive substrate 10 is likely to have superior alkaline resistance. In the case where the surface of the electroconductive substrate 10 is formed of nickel, the entire electroconductive substrate 10 may be formed of nickel, or the electroconductive substrate 10 may have a surface layer formed of nickel. The surface layer formed of nickel is a sputtered film or a plated film.

[Method for manufacturing water electrolysis electrode]

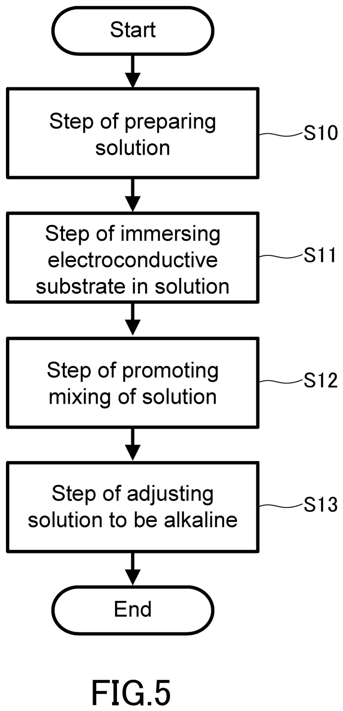

FIG. 5 is a flowchart showing an example of a method for manufacturing a water electrolysis electrode. The method for manufacturing a water electrolysis electrode according to the present embodiment includes a step S10 to a step S13. The step S10 is a step of preparing a solution. The step S11 is a step of immersing an electroconductive substrate in the solution. The step S12 is a step of promoting mixing of the solution. The step S13 is a step of adjusting the solution to be alkaline at ambient temperature. In this way, in the solution, a layered double hydroxide is synthesized and at the same time, a LDH layer including the layered double hydroxide is formed on the surface of the electroconductive electrode. As a result, a water electrolysis electrode can be manufactured in the solution.

Here, "ambient temperature" means a temperature range of 20°C ± 15°C, as specified in the Japanese Industrial Standard (JIS) Z 8703.

In the step S10, a solution S is prepared. Namely in the step S10, a solution for synthesizing the layered double hydroxide is prepared.

A precursor solution for preparing the solution S includes two or more transition metal ions. At least one of the two or more transition metal ions may be an ion of a transition metal included in the layered double hydroxide described below. The two or more transition metal ions include, for example, ions of at least two transition metals selected from the group consisting of V, Cr, Mn, Fe, Co, Ni, Cu, W, and Ru. From the layered double hydroxide including these transition metals, a water electrolysis electrode 1 having superior electrode activity can be obtained.

The two or more transition metal ions desirably include an ion of at least one transition metal selected from the group consisting of Ni and Fe. In this case, it is possible to manufacture a water electrolysis electrode 1 having even superior electrode activity.

The solvent of the precursor solution may be water, an organic solvent, or a mixture of water and an organic solvent.

The solution S is prepared, for example, by adding a chelating agent to the precursor solution. The chelating agent may be selected with reference to the above examples of chelating agents to be included in the LDH layer 20. The chelating agent in the solution S preferably includes at least one selected from the group consisting of acetylacetone and a citrate. This improves the dispersion stability of the complex in the solution S and facilitates formation of the LDH layer 20 on the surface of the electroconductive substrate 10. As a result, the water electrolysis electrode 1 can have even superior electrode activity. An example of the citrate is trisodium citrate.

By adjusting the content of the chelating agent in the solution S, the LDH layer 20 is easily formed in the desired state in the water electrolysis electrode 1. In detail, by adjusting the content of the chelating agent in the solution S, the contact angle on the surface of the LDH layer 20 can be adjusted to 20° or more and 100° or less. Thereby, a water electrolysis electrode 1 that is more suitable for suppressing the increase in overpotential can be obtained.

In the step S11, the electroconductive substrate 10 is immersed in the solution S. Namely in the step S11, the metal included in the electroconductive substrate 10 leaches into the solution S.

The surface of the electroconductive substrate 10 is preferably formed of nickel. In this case, for example, a water electrolysis electrode 1 having advantageous properties from the viewpoint of both corrosion resistance and electrical conductivity in alkaline water electrolysis can be manufactured easily.

The electroconductive substrate 10 desirably includes Ni. The two or more transition metal ions in the solution S desirably include an Fe ion. The solution S desirably includes a chloride ion. In this case, a reaction shown in Formula (3) can occur. Thereby, the electroconductive substrate 10 is etched. In detail, the Fe ion and the chloride ion, both being included in the solution S, react with the electroconductive substrate 10. Thereby, the electroconductive substrate 10 is etched by the Fe ion and the chloride ion. As a result, Ni included in the electroconductive substrate 10 leaches into the solution S.

$$4Ni^{2+}Cl^-_2 + 2Fe^{3+}Cl^-_3 + 2Ni \rightarrow 5Ni^{2+}Cl^-_2 + 2Fe^{2+}Cl^-_2 + Ni \qquad \text{Formula (3)}$$

In manufacturing the water electrolysis electrode 1, the ratio R of the amount of substance of the Fe ion in the solution S to the amount of substance of Ni in the electroconductive substrate 10 is not limited to a specific value. The ratio R is, for example, 0.75 or less. In this case, it is possible to prevent a problem that the nickel included in the electroconductive substrate 10 is dissolved by the reaction represented by Formula (3), where the dissolution makes it difficult to manufacture the water electrolysis electrode 1. The lower limit of the ratio R is not particularly limited and is, for example, 0.02.

The ratio R is preferably 0.04 or more and 0.10 or less. In this case, the LDH layer 20 is easily formed uniformly on the electroconductive substrate 10, and the water electrolysis electrode 1 having even superior electrode activity can be manufactured.

In manufacturing the water electrolysis electrode 1, the value W, which is obtained by dividing an amount of substance of Fe ion in the solution S with a surface area of the electroconductive substrate 10, is not limited to a specific value. The value W is, for example, 0.29 millimoles (mmol)/cm$^2$ or less. In this case, it is possible to prevent a problem that the nickel included in the electroconductive substrate 10 is dissolved by the reaction represented by Formula (3), where the dissolution makes it difficult to manufacture the water electrolysis electrode. The lower limit of the value W is not particularly limited and is, for example, 0.05 mmol/cm$^2$.

The value W is preferably 0.01 mmol/cm$^2$ or more and 0.2 mmol/cm$^2$ or less. In this case, the LDH layer 20 is easily formed uniformly on the surface of the electroconductive substrate 10, and the water electrolysis electrode 1 having superior electrode activity can be easily manufactured.

Next, in the step S12, mixing of the solution S is promoted. In the step S12, the LDH layer 20 is formed on the surface of the electroconductive substrate 10, whereby the water electrolysis electrode 1 is obtained.

By promoting the mixing of the solution S, the electroconductive substrate 10 is etched and the LDH layer 20 is formed on the surface of the electroconductive substrate 10.

Examples of methods to promote mixing of the solution S include: vibrating the electroconductive substrate 10; shaking the container in which the solution S and electroconductive substrate 10 are enclosed; and stirring the solution S using a stirrer with a stirrer bar. According to such methods, forced convection of the solution S occurs and mixing of the solution S is promoted. The mixing of the solution S may be promoted in a sealed container containing the solution S and the electroconductive substrate 10, or the mixing may be promoted under an inert gas atmosphere.

The expression "promote mixing of solution S" means promoting diffusion, by any of these methods, of the Ni ion leaching from the electroconductive substrate 10 into the solution S.

The step S13 is a step of adjusting the solution S to be alkaline. In the step S13, the LDH layer 20 is formed on the electroconductive substrate 10, whereby the water electrolysis electrode 1 is obtained.

The LDH layer 20 is formed by the step S13. The LDH layer 20 is formed on the surface of the electroconductive substrate 10.

The method of adjusting the solution S to be alkaline, namely, a method of adjusting the pH of the solution to be greater than 7, is not limited to a specific method. For example, the above-described solution S may be mixed with an alkaline solution such that the solution S is adjusted to be alkaline. Alternatively, a pH booster may be added to the above-described solution S such that the solution S is adjusted to be alkaline. In this case, the pH booster is not limited to a specific compound. The pH booster is, for example, a compound having an epoxy group. Examples of the pH booster include propylene oxide (POX), ethylene oxide, and butylene oxide.

When a pH booster having an epoxy group such as propylene oxide is added to the solution S, in the presence of a nucleophile such as a chloride ion, the pH booster can capture a hydrogen ion present in the solution S, following the ring-opening reaction of the epoxy group. Thereby, the pH of the solution S rises, and the solution S becomes alkaline. The pH of the solution S is 1, for example. When the pH booster is added to the solution S, the pH of the solution S rises gradually from 1, for example, and finally the solution S becomes alkaline. The final pH of the solution S is, for example, 8 or more and 12 or less. Addition of the pH booster to the solution S promotes the reaction in which hydrogen ion in the solution S is captured. Thereby, the pH of the solution S gradually rises. The period of time from the addition of the pH booster to the solution S until the pH of the solution S reaches a steady state is not limited to a specific period of time. That period of time can be, for example, 24 hours or longer, or several days.

The temperature of the solution S at the time of adjusting the solution S to be alkaline is not limited to a specific temperature. For example, the temperature of the solution S is ambient temperature. In this case, a water electrolysis electrode 1 having superior electrode activity can be obtained easily.

Preferably, the step S13 includes boosting the pH. Thereby, a layered double hydroxide can be formed on the surface of the electroconductive substrate 10 in a short period of time, and a water electrolysis electrode 1 having superior electrode activity can be obtained easily. In addition, the thus manufactured water electrolysis electrode 1 is likely to have superior durability.

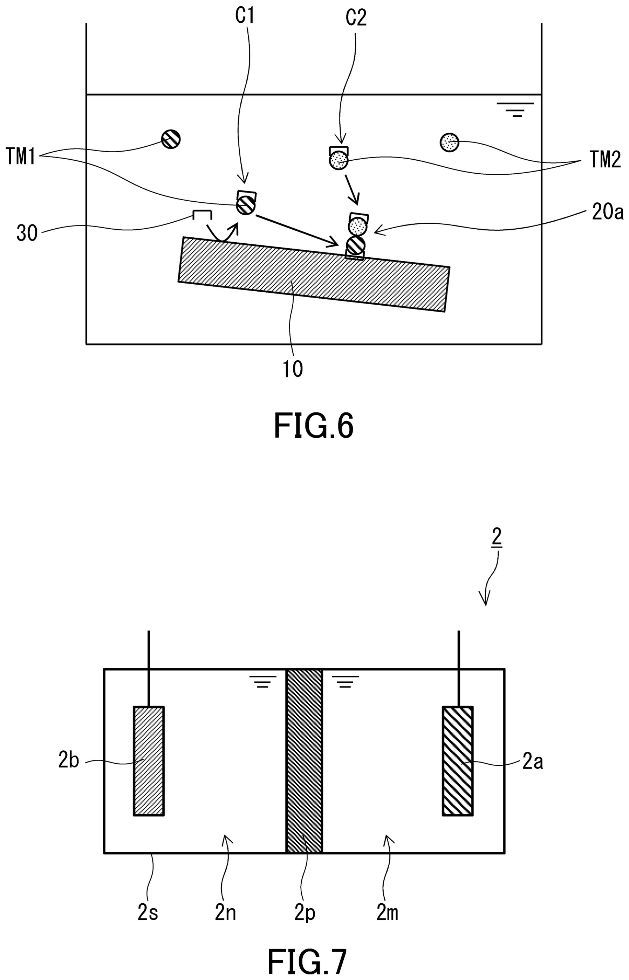

FIG. 6 is a diagram schematically showing an example of a mechanism in manufacturing a water electrolysis electrode. As shown in FIG. 6, an electroconductive substrate 10 is immersed in a solution that includes a transition metal ion TM1, a transition metal ion TM2, and a chelating agent 30. For example, the transition metal ion TM1 is a Ni ion, and the transition metal ion TM2 is an Fe ion. Furthermore, Ni is present on the surface of the electroconductive substrate 10. Some amount of the transition metal ion TM2 allows the Ni present on the surface of the electroconductive substrate 10 to leach by etching. Some amount of the chelating agent 30 reacts with the surface of the electroconductive substrate 10, and a complex C1 is formed from the transition metal ion TM1 derived from the electroconductive substrate 10 and the chelating agent 30. In addition, when the solution is adjusted to be alkaline, a complex C1 of the transition metal ion TM1 derived from the solution and the chelating agent 30 is formed, and a complex C2 of the transition metal ion TM2 and the chelating agent 30 is formed in the solution. Next, the complex C1 and the complex C2 react with other on the surface of the electroconductive substrate 10, whereby the LDH 20a is synthesized to coat the surface of the electroconductive substrate 10. Furthermore, since the complex C1 and the complex C2 include the chelating agent 30, the crystal growth of the LDH 20a is inhibited. Thereby, a LDH layer 20 including the LDH 20a and the chelating agent 30 is formed on the surface of the electroconductive substrate 10, whereby a water electrolysis electrode 1 is obtained.

The water electrolysis electrode 1 according to the present embodiment can be used, for example, as an electrode for a water electrolysis cell in an alkaline water electrolysis device or an anion-exchange membrane type water electrolysis device. The water electrolysis electrode 1 is used, for example, in at least one selected from the group consisting of the anode and the cathode in the water electrolysis device. In other words, at least one selected from the group consisting of a water electrolysis anode including the water electrolysis electrode 1 and a water electrolysis cathode including the water electrolysis electrode 1 can be provided. Thereby, the activity of the anodic reaction or the cathodic reaction in water electrolysis is likely to increase.

(Second embodiment)

FIG. 7 is a cross-sectional view schematically showing an example of a water electrolysis cell according to a second embodiment. As shown in FIG. 7, a water electrolysis cell 2 includes an anode 2a, a cathode 2b, and a separator 2p. At least one selected from the group consisting of the anode 2a and the cathode 2b includes, for example, the water electrolysis electrode 1 according to the first embodiment. In this case, the activity of the anodic reaction or the activity of the cathodic reaction in the water electrolysis cell 2 is likely to increase, and the anode 2a or the cathode 2b is likely to exhibit superior performance.

The water electrolysis cell 2 is, for example, an alkaline water electrolysis cell for which an alkaline aqueous solution is used. The alkaline aqueous solution used in the water electrolysis cell 2 is not limited to a specific alkaline aqueous solution. Examples of the alkaline aqueous solution include an aqueous potassium hydroxide solution and an aqueous sodium hydroxide solution.

As shown in FIG. 7, the water electrolysis cell 2, for example, includes an electrolytic cell 2s, a first chamber 2m, and a second chamber 2n. The separator 2p is arranged inside the electrolytic cell 2s, and separates the interior of the electrolytic cell 2s into the first chamber 2m and the second chamber 2n. The anode 2a is arranged in the first chamber 2m, and the cathode 2b is arranged in the second chamber 2n.

The separator 2p is, for example, a separator for alkaline water electrolysis. The separator 2p is, for example, a sheet-like porous membrane. The separator 2p has a thickness, for example, in a range of 100 $\mu$m to 500 $\mu$m and has pores that serve as a passage for ions or an electrolytic solution. Materials for the separator 2p are not limited to a specific material. Examples of the material for the separator 2p include asbestos, polymer-reinforced asbestos, potassium titanate bonded with polytetrafluoroethylene (PTFE), zirconia bonded with PTFE, and antimonic acid and antimony oxide bonded with polysulfone. Other examples of materials for the separator 2p include sintered nickel, nickel coated with ceramics and nickel oxide, and polysulfone. The separator 2p may be Zirfon Perl UTP 500 manufactured by Agfa-Gevaert Group.

The anode 2a may be arranged in a state of zero gap, namely, in a state where the anode 2a is in contact with the separator 2p, or the anode 2a may be arranged in a state in which there is a gap between the anode 2a and the separator 2p. The cathode 2b may be arranged in a state being in contact with the separator 2p, or the cathode 2b may be arranged in a state in which there is a gap between the cathode 2b and the separator 2p.

The water electrolysis cell 2 electrolyzes an alkaline aqueous solution to produce hydrogen and oxygen. An aqueous solution including a hydroxide of an alkali metal or an alkaline earth metal is supplied to the first chamber 2m. In addition, an alkaline aqueous solution may be supplied to the second chamber 2n. Electrolysis is carried out while an alkaline aqueous solution of a predetermined concentration is discharged from the first chamber 2m and the second chamber 2n, whereby hydrogen and oxygen are produced.

In the case where the anode 2a includes the water electrolysis electrode 1, the cathode 2b may include, for example, an electrode material known as a cathode for an alkaline water electrolysis cell. In the case where the cathode 2b includes the water electrolysis electrode 1, the anode 2a may include the electrode material known as the anode for the alkaline water electrolysis cell. In the water electrolysis cell 2, both the anode 2a and the cathode 2b may include the water electrolysis electrode 1.

With the above configuration, at least one selected from the group consisting of the anode 2a and the cathode 2b includes the water electrolysis electrode 1, and thus, the water electrolysis cell 2 can exhibit superior performance.

(Third embodiment)

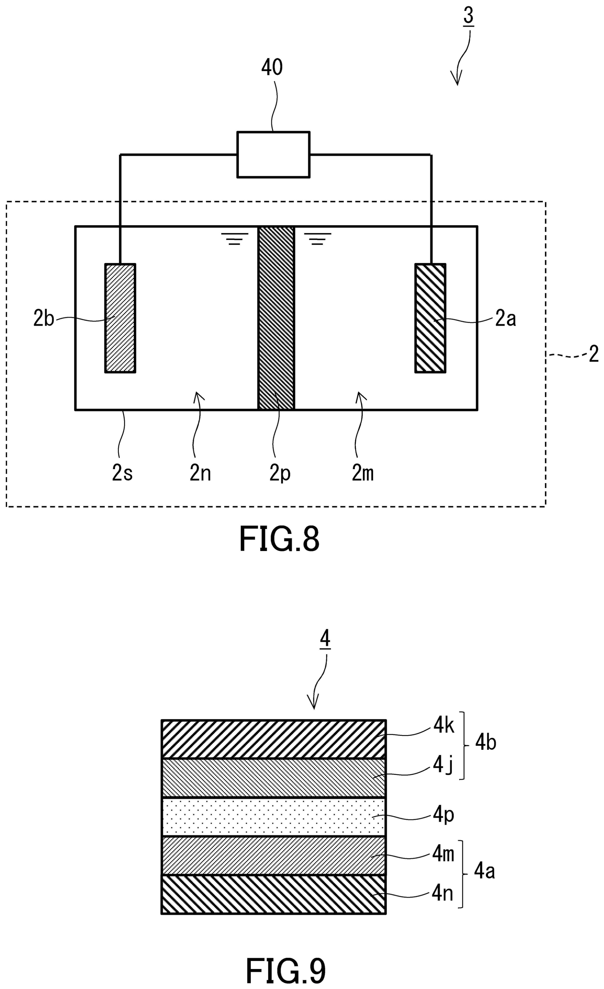

FIG. 8 is a cross-sectional view schematically showing an example of a water electrolysis device according to a third embodiment. As shown in FIG. 8, a water electrolysis device 3 includes the water electrolysis cell 2 according to the second embodiment and a voltage applying unit 40. The voltage applying unit 40 applies a voltage between the cathode 2b and the anode 2a. The water electrolysis device 3 is an alkaline water electrolysis device in which an alkaline aqueous solution is used.

The voltage applying unit 40 is electrically connected to the anode 2a and the cathode 2b. The voltage applying unit 40 causes the potential of the anode 2a to become higher than the potential of the cathode 2b. The voltage applying unit 40 is not limited to a specific type of voltage applying unit as long as the voltage applying unit 40 is capable of applying a voltage between the anode 2a and the cathode 2b. The voltage applying unit 40 may be a device to adjust the voltage to be applied between the anode 2a and the cathode 2b. In the case where the voltage applying unit 40 is connected to a direct current power source such as a battery, a solar cell or a fuel cell, the voltage applying unit 40 includes a DC/DC converter, for example. In the case where the voltage applying unit 40 is connected to an alternating current power source such as a commercial power source, the voltage applying unit 40 includes an AC/DC converter, for example. The voltage applying unit 40 may be an electric power type power source, for example. In the electric power type power source, the voltage to be applied between the anode 2a and the cathode 2b, and the current to flow between the anode 2a and the cathode 2b, are adjusted such that the electric power supplied to the water electrolysis device 3 will be a predetermined set value.

With the above configuration, the water electrolysis device 3 can exhibit superior performance.

(Fourth embodiment)

FIG. 9 is a cross-sectional view schematically showing an example of a water electrolysis cell according to a fourth embodiment. As shown in FIG. 9, a water electrolysis cell 4 includes an anode 4a, a cathode 4b, and an electrolyte membrane 4p. In the water electrolysis cell 4, at least one selected from the group consisting of the anode 4a and the cathode 4b includes, for example, the water electrolysis electrode 1 according to the first embodiment. In this case, the activity of the anodic reaction or the activity of the cathodic reaction in the water electrolysis cell 4 is likely to increase, and the anode 4a or the cathode 4b is likely to exhibit superior performance.

The water electrolysis cell 4 is, for example, an anion-exchange membrane (AEM) type water electrolysis cell. As shown in FIG. 9, the anode 4a includes, for example, a catalyst layer 4m and a gas diffusion layer 4n. The cathode 4b includes, for example, a catalyst layer 4j and a gas diffusion layer 4k. The catalyst layer 4m of the anode 4a is in contact with one of the main surfaces of the electrolyte membrane 4p, and the catalyst layer 4j of the cathode 4b is in contact with the other main surface of the electrolyte membrane 4p. The electrolyte membrane 4p is, for example, an anion-exchange membrane.

The electrolyte membrane 4p is not limited to a specific type of electrolyte membrane. The electrolyte membrane 4p may include an anion-exchange membrane. The electrolyte membrane 4p may be an anion-exchange membrane. In the case where the electrolyte membrane 4p is an anion-exchange membrane, the electrolyte membrane 4p is not limited to a specific anion exchange membrane. The anion-exchange membrane has conductivity for anions such as a hydroxide ion. The anion-exchange membrane is capable of preventing mixing of the oxygen gas evolved at the anode 4a with the hydrogen gas evolved at the cathode 4b. The oxygen gas passes through the gas diffusion layer 4n and is led outside the anode 4a. The hydrogen gas passes through the gas diffusion layer 4k and is led outside the cathode 4b.

In the water electrolysis cell 4, in the case where the anode 4a includes the water electrolysis electrode 1, the cathode 4b may be a known cathode in an AEM-type water electrolysis cell. At this time, the LDH layer 20 of the water electrolysis electrode 1 can function as the catalyst layer 4m, and the electroconductive substrate 10 of the water electrolysis electrode 1 may function as the gas diffusion layer 4n. In the water electrolysis cell 4, in the case where the cathode 4b includes the water electrolysis electrode 1, the anode 4a may be the known anode in the AEM-type water electrolysis cell. In this case, the LDH layer 20 of the water electrolysis electrode 1 may function as the catalyst layer 4j, and the electroconductive substrate 10 of the water electrolysis electrode 1 can function as the gas diffusion layer 4k. In the water electrolysis cell 4, both the anode 4a and the cathode 4b each may include the water electrolysis electrode 1.

With the above configuration, at least one selected from the group consisting of the anode 4a and the cathode 4b includes the water electrolysis electrode 1, whereby the water electrolysis cell 4 can exhibit superior performance.

(Fifth embodiment)

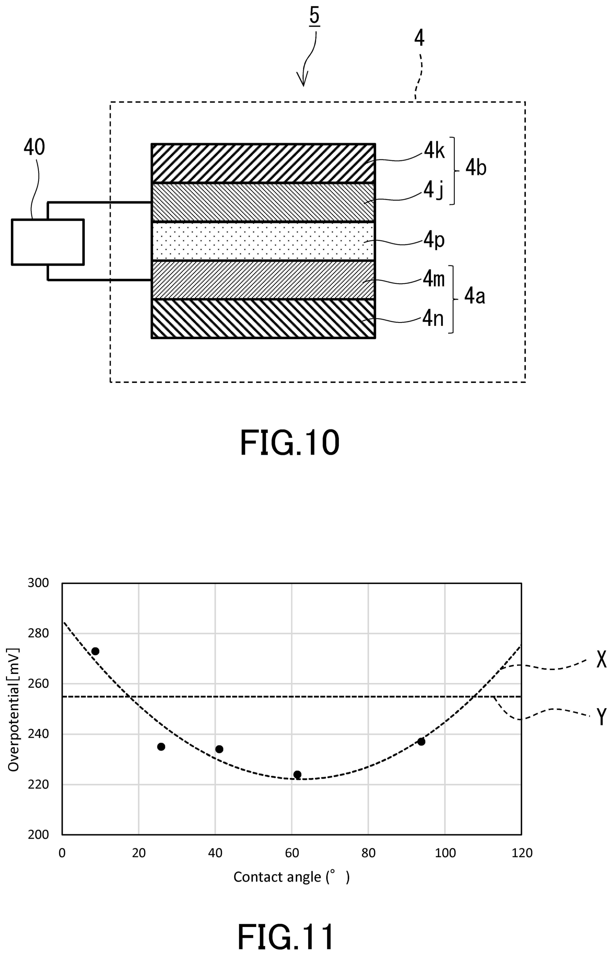

FIG. 10 is a cross-sectional view schematically showing an example of a water electrolysis device according to a fifth embodiment. As shown in FIG. 10, a water electrolysis device 5 includes a water electrolysis cell 4 and a voltage applying unit 40. The voltage applying unit 40 applies a voltage between a cathode 4b and an anode 4a. The water electrolysis device 5 is, for example, an AEM-type water electrolysis device.

The voltage applying unit 40 is electrically connected to the anode 4a and to the cathode 4b. The voltage applying unit 40 causes the potential of the anode 4a to become higher than the potential of the cathode 4b. The voltage applying unit 40 is not limited to a specific type of voltage applying unit as long as the voltage applying unit 40 is capable of applying a voltage between the anode 4a and the cathode 4b. The voltage applying unit 40 may be a unit to adjust the voltage to be applied between the anode 4a and the cathode 4b. In the case where the voltage applying unit 40 is connected to a direct current power source such as a battery, a solar cell or a fuel cell, the voltage applying unit 40 includes a DC/DC converter, for example. In the case where the voltage applying unit 40 is connected to an alternating current power source such as a commercial power source, the voltage applying unit 40 includes an AC/DC converter, for example. The voltage applying unit 40 may be an electric power type power source, for example. In the electric power type power source, the voltage to be applied between the anode 4a and the cathode 4b, and the current to flow between the anode 4a and the cathode 4b, are adjusted such that the electric power supplied to the water electrolysis device 5 will be a predetermined set value.

With the above configuration, the water electrolysis device 5 can exhibit superior performance.

(Other embodiments)

(Appendix)

The following techniques are disclosed based on the above description.

(Technique 1)

A water electrolysis electrode including:

an electroconductive substrate; and
a layered double hydroxide layer including two or more transition metals and disposed on a surface of the electroconductive substrate, wherein
a contact angle of a 6 mol/L aqueous potassium hydroxide solution on a surface of the layered double hydroxide layer is 20° or more and 100° or less.

According to Technique 1, it is possible to provide a water electrolysis electrode that is advantageous from the viewpoint of suppressing the increase in overpotential.

(Technique 2)

The water electrolysis electrode according to Technique 1, wherein the contact angle on the surface of the layered double hydroxide layer is 26° or more.

According to Technique 2, it is possible to provide a water electrolysis electrode that is more suitable for suppressing the increase in overpotential.

(Technique 3)

The water electrolysis electrode according to Technique 1 or 2, wherein the layered double hydroxide layer includes at least two transition metals selected from the group consisting of V, Cr, Mn, Fe, Co, Ni, Cu, W, and Ru. According to Technique 3, the water electrolysis electrode is likely to have superior electrode activity.

(Technique 4)

The water electrolysis electrode according to any one of Techniques 1 to 3, wherein the layered double hydroxide layer includes at least one transition metal selected from the group consisting of Ni and Fe. According to Technique 4, the water electrolysis electrode can have even superior electrode activity.

(Technique 5)

The water electrolysis electrode according to any one of Techniques 1 to 4, wherein the layered double hydroxide layer includes a chelating agent.

(Technique 6)

The water electrolysis electrode according to Technique 5, wherein the chelating agent includes at least one selected from the group consisting of acetylacetone and a citrate.

According to Techniques 5 and 6, a water electrolysis electrode can have even superior electrode activity.

(Technique 7)

The water electrolysis electrode according to any one of Techniques 1 to 6, wherein the layered double hydroxide layer has a thickness of 500 nm or more. According to Technique 7, an increase in overvoltage in the anodic reaction and the cathodic reaction of water electrolysis can be further suppressed.

(Technique 8)

The water electrolysis electrode according to any one of Techniques 1 to 7, wherein the layered double hydroxide layer has a thickness of 1800 nm or less. According to Technique 8, a water electrolysis electrode can have even superior electrode activity.

(Technique 9)

A water electrolysis anode, including the water electrolysis electrode according to any one of Techniques 1 to 8.

(Technique 10)

A water electrolysis cathode, including the water electrolysis electrode according to any one of Techniques 1 to 8.

According to Techniques 9 and 10, the activity of the anodic reaction or the cathodic reaction of the water electrolysis is likely to increase.

(Technique 11)

A water electrolysis cell, including:

an anode;
a cathode; and
a separator, wherein
at least one selected from the group consisting of the following requirements is satisfied: the anode is the water electrolysis anode according to Technique 9; and the cathode is the water electrolysis cathode according to Technique 10.

(Technique 12)

A water electrolysis cell, including:

an anode;
a cathode; and
an electrolyte membrane, wherein
at least one selected from the group consisting of the following requirements is satisfied: the anode is the water electrolysis anode according to Technique 9; and the cathode is the water electrolysis cathode according to Technique 10.

According to Techniques 11 and 12, the activity of the anodic reaction or the cathodic reaction in the water electrolytic cells is likely to be improved.

(Technique 13)

A water electrolysis device including:

the water electrolysis cell according to Technique 11 or 12; and

a voltage applying unit connected to the cathode and to the anode and configured to apply a voltage between the cathode and the anode.

According to Technique 13, the water electrolysis device can exhibit superior performance.

(Technique 14)

A method for manufacturing a water electrolysis electrode, the water electrolysis electrode including an electroconductive substrate and a layered double hydroxide layer disposed on a surface of the electroconductive substrate,
the method including:

preparing a solution including a chelating agent and two or more transition metal ions;
immersing the electroconductive substrate in the solution, the electroconductive substrate including a transition metal ion that is the same as at least one of the two or more transition metal ions contained in the solution;
promoting mixing of the solution; and
adjusting the solution to be alkaline at ambient temperature, wherein
a contact angle of a 6 mol/L aqueous potassium hydroxide solution on a surface of the layered double hydroxide layer is 20° to 100°.

According to Technique 14, the water electrolysis electrode of the present disclosure can be manufactured.

(Technique 15)

The method according to Technique 14, including boosting pH of the solution. According to Technique 15, a layered double hydroxide can be formed on an electroconductive substrate in a short period of time.

(Technique 16)

The method according to Technique 14 or 15, wherein the two or more transition metal ions include at least two transition metal ions selected from the group consisting of V, Cr, Mn, Fe, Co, Ni, Cu, W, and Ru.

(Technique 17)

The method according to any one of Techniques 14 to 16, wherein the two or more transition metal ions include at least one transition metal ion selected from the group consisting of Ni and Fe.

(Technique 18)

The method according to any one of Techniques 14 to 17, wherein the electroconductive substrate includes Ni.
According to Techniques 16 to 18, a water electrolysis electrode having even superior electrode activity can be manufactured.

EXAMPLES

The present disclosure is further explained in detail by referring to Examples. The following Examples demonstrate a part of the present disclosure, and the present disclosure is not limited to the Examples.

(Example 1)

In 3.32 milliliters (mL) of water, 0.226 g of nickel chloride hexahydrate and 0.128 g of iron chloride hexahydrate were dissolved to prepare a solution. The nickel chloride hexahydrate and the iron chloride hexahydrate were products purchased from FUJIFILM Wako Pure Chemical Corporation. To this solution, 0.04 mL of acetylacetone (ACAC) as a chelating agent was added to obtain a chelating agent solution. The acetylacetone was a product purchased from Sigma-Aldrich Corporation. An amount of substance of the acetylacetone in the chelating agent solution was 1/3.65 of a total amount of substance of Ni ions and Fe ions.
One Ni plate manufactured by Nilaco Corporation was washed with acetone for 10 minutes and then washed with a 1 mol/L aqueous HCl solution for 10 minutes, for degreasing the Ni plate and removing impurities. The Ni plate had a thickness of 0.2 mm, and the Ni plate was shaped cylindrical with a diameter of 15 mm in a plan view. The Ni plate had a surface area of 3.63 cm$^2$. The Ni plate had a mass of 0.335 g. Next, the Ni plate was washed with water and dried, whereby the washing treatment of the Ni plate was completed.

After completion of the washing process, the Ni plate was then immersed in the chelating agent solution described above. In this state, the chelating agent solution including the Ni plate was shaken and stirred at room temperature for 24 hours. At this time, the outermost surface of the Ni plate was etched in accordance with the above Formula (3). In this case, a ratio R of the amount of substance of Fe ions in the chelating agent solution to the amount of substance of Ni in the Ni plate was 0.083. A value W obtained by dividing the amount of substance of the Fe ion included in the chelating agent solution by the surface area of the Ni plate was 0.13 mmol/cm$^2$.

Later, 0.480 mL of propylene oxide (POX) as a pH booster was added to the chelating agent solution. The thus obtained solution as a mixture was shaken and stirred at room temperature for 72 hours. At this time, the POX gradually captured the hydrogen ions in the solution, whereby the pH of the mixed solution gradually increased. After 72 hours of the shaking and stirring, the Ni plate was collected, and the Ni plate was washed with water and dried. In this way, an electrode according to Example 1 was obtained.

(Example 2)

An electrode according to Example 2 was prepared in the same way as in Example 1, except for the following points. In 3.64 mL of water, 0.124 g of nickel chloride hexahydrate and 0.07 g of iron chloride hexahydrate were dissolved to prepare a solution. To this solution, 0.0061 mL of ACAC as a chelating agent was added to obtain a chelating agent solution. An amount of substance of the ACAC in the chelating agent solution was 1/13 of a total amount of substance of Ni ions and Fe ions. The Ni plate had a mass of 0.315 g. To the chelating agent solution, 0.265 mL of POX as a pH booster was added. The ratio R was 0.049. The value W was 0.07 mmol/cm$^2$.

(Example 3)

An electrode according to Example 3 was prepared in the same way as in Example 1, except for the following points. In 3.64 mL of water, 0.124 g of nickel chloride hexahydrate and 0.07 g of iron chloride hexahydrate were dissolved to prepare a solution. To this solution, 0.123 mL of ACAC as a chelating agent was added to obtain a chelating agent solution. An amount of substance of the ACAC in the chelating agent solution was 1.5 times of a total amount of substance of Ni ions and Fe ions. The Ni plate had a mass of 0.315 g. To the chelating agent solution, 0.265 mL of POX as a pH booster was added. The ratio R was 0.049. The value W was 0.07 mmol/cm$^2$.

(Example 4)

An electrode according to Example 4 was prepared in the same way as Example 1, except for the following points. In 3.61 mL of water, 0.123 g of nickel chloride hexahydrate and 0.07 g of iron chloride hexahydrate were dissolved to prepare a solution. To this solution, 0.486 mL of ACAC as a chelating agent was added to obtain a chelating agent solution. An amount of substance of the ACAC in the chelating agent solution was 6.1 times of a total amount of substance of Ni ions and Fe ions. The Ni plate had a mass of 0.315 g. To the chelating agent solution, 0.262 mL of POX as a pH booster was added. The ratio R was 0.049. The value W was 0.07 mmol/cm$^2$.

(Comparative Example 1)

An electrode according to Comparative Example 1 was prepared in the same way as in Example 1, except for the following points. In 3.80 mL of water, 0.065 g of nickel chloride hexahydrate and 0.037 g of iron chloride hexahydrate were dissolved to prepare a solution. To this solution, 0.0128 mL of ACAC as a chelating agent was added to obtain a chelating agent solution. An amount of substance of the ACAC in the chelating agent solution was 1/3.27 of a total amount of substance of Ni ions and Fe ions. The Ni plate had a mass of 0.335 g. To the chelating agent solution, 0.138 mL of POX as a pH booster was added. The ratio R was 0.02. The value W was 0.08 mmol/cm$^2$.

[Evaluation of thickness of layered double hydroxide layer]

Measurement was carried out with respect to a single point in the center of each electrode, using a spectroscopic ellipsometer UVISEL2 manufactured by HORIBA, Ltd. under the conditions of an incident angle of 70°, a measurement wavelength range of 0.6 eV to 5.5 eV, and a spot diameter of 1 mm $\times$ 2 mm. As a result, measurement data E of the polarization parameters was obtained. Next, an optical model as shown in FIG. 3 was created, and simulation data M of the polarization parameters based on the optical model was obtained. The simulation data M of the polarization parameters was then fitted to the measurement data E of the polarization parameters. In detail, the measurement data E was analyzed using Delta Psi2 software supplied with UVISEL2, and the thickness of the interface layer, the thickness of the dense layer, and the thickness of the surface roughness layer were determined using the optical model shown in FIG. 3. For the fitting calculations in this analysis, the New Amorphous model equation and the Tauc-Lorentz equation implemented by HORIBA Jobin Yvon were used, and the result with the smaller mean square error between the simulation data M calculated from the optical model and the measurement data E was adopted. In addition, the fitting calculations were performed such that their mean square error was less than 10°.

A thickness $T_{20}$ of the layered double hydroxide layer was calculated from a thicknesses $T_{26}$ of the interface layer, a thickness $T_{27}$ of the dense layer, and a thickness $T_{26}$ of the surface roughness layer each obtained by the method described above, based on the above Formula (1). The results are shown in Table 1.

[Measurement of contact angle]

A contact angle was measured by the θ/2 method using a contact angle meter DM-501 manufactured by Kyowa Interface Science Co., Ltd. The contact angle was evaluated by dropping 0.2 microliter (μL) of aqueous potassium hydroxide solution onto a surface of an electrode. The concentration of the aqueous potassium hydroxide solution was 6 mol/L. The results are shown in Table 1. The contact angle measurement was performed three times for the electrode of each Example and Comparative Example. The contact angle values shown in Table 1 are the average of the values obtained from the three measurements.

[Evaluation of overpotential of electrode]

The oxygen evolution reaction (OER) overpotential of the electrode according to each Example and Comparative Example was evaluated. For the measurement, the followings were used: a potentiostat VersaSTAT4 manufactured by Princeton Applied Research; an alkali sample vial (200 mL) manufactured by BAS Inc.; and a Teflon cap (200 mL) manufactured by BAS Inc. As a working electrode jig, a plate electrode AE-2 manufactured by EC FRONTIER CO., LTD. was used. To the jig, the electrode as working electrode according to each Example and Comparative Example was fixed. As a counter electrode, a double platinum wire counter electrode D.6.0305.200J manufactured by Metrohm AG was used. The current derived from the anodic reaction of the water electrolysis cell was measured using the three-electrode method under the following measurement conditions. The anodic reaction is an oxygen evolution reaction.

(Measurement conditions)

Solution: 1mol/L KOH solution
Potential relative to reversible hydrogen electrode (RHE): 1.0 V to 1.7 V
Number of cycles: 5 cycles
Rate of potential sweep: 10 mV/sec
Temperature: 25°C

The overpotential was determined by subtracting a theoretical potential of 1.229 V required to drive the oxygen evolution reaction from the voltage corresponding to the current density of 10 mA/cm$^2$ in the fifth cycle. The results are shown in Table 1.

[Table 1]

|  | Contact angle [°] | Overpotential [mV] | Thickness of layered double hydroxide layer [nm] |
|---|---|---|---|
| Example 1 | 25.8 | 235 | 1152 |
| Example 2 | 41.0 | 234 | 1305 |
| Example 3 | 61.4 | 224 | 1785 |
| Example 4 | 93.8 | 237 | 520 |
| Comparative Example 1 | 8.6 | 273 | 448 |

As shown in Table 1, the contact angle on the surface of the layered double hydroxide layer was 20° or more and 100° or less for the electrode according to each Example. In addition, the electrode according to each Example had an overpotential of 255 mV or less, namely, the increase in overpotential was suppressed. These results indicate that the water electrolysis electrode used in each Example is superior from the viewpoint of electrode activity.

FIG. 11 is a graph showing a relation between a contact angle and overpotential in each Example and Comparative Example. In FIG. 11, the horizontal axis indicates the contact angle and the vertical axis indicates the overpotential. Further, a curve X indicates the approximate curve of the plots in each of Example and Comparative Example. A straight line Y parallel to the horizontal axis indicates a straight line with an overpotential of 255 mV.

As shown in FIG. 11, the curve X has a minimum value when the contact angle is approximately 60°. Therefore, it can be understood that the increase in overpotential can be suppressed by appropriately adjusting the contact angle. In addition, it is evident from the curve X and the straight line Y that the overpotential is estimated to be 255 mV or less when the contact angle is 20° or more and 100° or less. In other words, it can be inferred as possible to obtain a water electrolysis electrode capable of suppressing increase in overpotential if the contact angle is 20° or more and 100° or less.

INDUSTRIAL APPLICABILITY

A water electrolysis electrode of the present disclosure can be used as an anode or a cathode for water electrolysis.

**Claims**

1. A water electrolysis electrode comprising:

   an electroconductive substrate; and
   a layered double hydroxide layer comprising two or more transition metals and disposed on a surface of the electroconductive substrate, wherein
   a contact angle of a 6 mol/L aqueous potassium hydroxide solution on a surface of the layered double hydroxide layer is 20° or more and 100° or less.

2. The water electrolysis electrode according to claim 1, wherein
   the contact angle on the surface of the layered double hydroxide layer is 26° or more.

3. The water electrolysis electrode according to claim 1, wherein
   the layered double hydroxide layer comprises at least two transition metals selected from the group consisting of V, Cr, Mn, Fe, Co, Ni, Cu, W, and Ru.

4. The water electrolysis electrode according to claim 1, wherein
   the layered double hydroxide layer comprises at least one transition metal selected from the group consisting of Ni and Fe.

5. The water electrolysis electrode according to claim 1, wherein
   the layered double hydroxide layer comprises a chelating agent.

6. The water electrolysis electrode according to claim 5, wherein
   the chelating agent comprises at least one selected from the group consisting of acetylacetone and a citrate.

7. The water electrolysis electrode according to claim 1, wherein
   the layered double hydroxide layer has a thickness of 500 nm or more.

8. The water electrolysis electrode according to claim 1, wherein
   the layered double hydroxide layer has a thickness of 1800 nm or less.

9. A water electrolysis anode, comprising the water electrolysis electrode according to claim 1.

10. A water electrolysis cathode, comprising the water electrolysis electrode according to claim 1.

11. A water electrolysis cell, comprising:

    an anode;

a cathode; and

a separator, wherein

at least one selected from the group consisting of the following requirements is satisfied: the anode is the water electrolysis anode according to claim 9; and the cathode is the water electrolysis cathode according to claim 10.

12. A water electrolysis cell, comprising:

an anode;

a cathode; and

an electrolyte membrane, wherein

at least one selected from the group consisting of the following requirements is satisfied: the anode is the water electrolysis anode according to claim 9; and the cathode is the water electrolysis cathode according to claim 10.

13. A water electrolysis device comprising:

the water electrolysis cell according to claim 11 or 12; and

a voltage applying unit connected to the cathode and to the anode and configured to apply a voltage between the cathode and the anode.

14. A method for manufacturing a water electrolysis electrode, the water electrolysis electrode comprising an electroconductive substrate and a layered double hydroxide layer disposed on a surface of the electroconductive substrate, the method comprising:

preparing a solution comprising a chelating agent and two or more transition metal ions;

immersing the electroconductive substrate in the solution, the electroconductive substrate comprising a transition metal ion that is the same as at least one of the two or more transition metal ions contained in the solution;

promoting mixing of the solution; and

adjusting the solution to be alkaline at ambient temperature, wherein

a contact angle of a 6 mol/L aqueous potassium hydroxide solution on a surface of the layered double hydroxide layer is 20° to 100°.

15. The method according to claim 14, comprising boosting pH of the solution.

16. The method according to claim 14, wherein

the two or more transition metal ions comprise at least two transition metal ions selected from the group consisting of V, Cr, Mn, Fe, Co, Ni, Cu, W, and Ru.

17. The method according to claim 14, wherein

the two or more transition metal ions comprise at least one transition metal ion selected from the group consisting of Ni and Fe.

18. The method according to claim 14, wherein

the electroconductive substrate comprises Ni.

FIG.1

FIG.2

FIG.3

$\oslash$ : $M_1^{2+}$     ● : $M_2^{3+}$     ○ : $OH^-$

$\square$ : $A^{n-}$     $\circ$ : $H_2O$

FIG.4

```
                    ┌─────────────┐
                    │    Start    │
                    └─────────────┘
                           │
                           ▼
              ┌───────────────────────┐
              │   Step of preparing   │ ── S10
              │       solution        │
              └───────────────────────┘
                           │
                           ▼
              ┌───────────────────────┐
              │  Step of immersing    │
              │   electroconductive   │ ── S11
              │ substrate in solution │
              └───────────────────────┘
                           │
                           ▼
              ┌───────────────────────┐
              │  Step of promoting    │ ── S12
              │   mixing of solution  │
              └───────────────────────┘
                           │
                           ▼
              ┌───────────────────────┐
              │  Step of adjusting    │ ── S13
              │ solution to be alkaline│
              └───────────────────────┘
                           │
                           ▼
                    ┌─────────────┐
                    │     End     │
                    └─────────────┘
```

FIG.5

FIG.6

FIG.7

3

40

2b

2a

2

2s 2n 2p 2m

FIG.8

4

4k ⎤ 4b
4j ⎦

4p

4m ⎤ 4a
4n ⎦

FIG.9

**FIG.10**

**FIG.11**

## INTERNATIONAL SEARCH REPORT

International application No.

**PCT/JP2024/021774**

**A.    CLASSIFICATION OF SUBJECT MATTER**

*C25B 11/052*(2021.01)i; *C25B 1/04*(2021.01)i; *C25B 9/00*(2021.01)i; *C25B 11/091*(2021.01)i
FI:    C25B11/052; C25B1/04; C25B9/00 A; C25B11/091

According to International Patent Classification (IPC) or to both national classification and IPC

**B.    FIELDS SEARCHED**

Minimum documentation searched (classification system followed by classification symbols)

C25B11/052; C25B1/04; C25B9/00; C25B11/091

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2018-43193 A (KABUSHIKI KAISHA TOSHIBA) 22 March 2018 (2018-03-22)<br>entire text | 1-18 |
| A | CN 113293405 A (HEFEI INSTITUTES OF PHYSICAL SCIENCE, CHINESE ACADEMY OF SCIENCES) 24 August 2021 (2021-08-24)<br>entire text | 1-18 |
| A | CN 107604381 A (JILIN UNIVERSITY) 19 January 2018 (2018-01-19)<br>entire text | 1-18 |
| A | CN 110965076 A (JILIN UNIVERSITY) 07 April 2020 (2020-04-07)<br>entire text | 1-18 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **07 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/021774**

| Patent document cited in search report | | | Publication date (day/month/year) | Patent family member(s) | Publication date (day/month/year) |
|---|---|---|---|---|---|
| JP | 2018-43193 | A | 22 March 2018 | US 2018/0073153 A1 entire text | |
| CN | 113293405 | A | 24 August 2021 | (Family: none) | |
| CN | 107604381 | A | 19 January 2018 | (Family: none) | |
| CN | 110965076 | A | 07 April 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SEYEONG LEE et al.** Operational durability of three-dimensional Ni-Fe layered double hydroxide electrocatalyst for water oxidation. *Electrochimica Acta*, 2019, vol. 315, 94-101

- **JIANDE CHEN et al.** Interfacial Interaction between FeOOH and Ni-Fe LDH to Modulate the Local Electronic Structure for Enhanced OER Electrocatalysis. *ACS Catalysis*, 2018, vol. 8, 11342-11351